Europäisches Patentamt

European Patent Office

Office européen des brevets

(19)

(11) **EP 0 519 995 B1**

(12) ## EUROPEAN PATENT SPECIFICATION

(45) Date of publication and mention
of the grant of the patent:
**11.06.1997 Bulletin 1997/24**

(51) Int Cl.[6]: **H04N 7/30**

(86) International application number:
**PCT/EP91/00451**

(21) Application number: **91906295.0**

(22) Date of filing: **09.03.1991**

(87) International publication number:
**WO 91/14340 (19.09.1991 Gazette 1991/22)**

(54) **DIGITAL IMAGE PROCESSING INCLUDING BLOCK EDGES FILTERING**

DIGITALE BILDVERARBEITUNG MIT FILTERUNG DER BLOCKKANTEN

TRAITEMENT D'IMAGES NUMERIQUES COMPRENANT LE FILTRAGE DES LIMITES DE BLOC

(84) Designated Contracting States:
**AT BE CH DE DK ES FR GB IT LI NL SE**

(30) Priority: **15.03.1990 US 494120**

(43) Date of publication of application:
**30.12.1992 Bulletin 1992/53**

(73) Proprietor: **THOMSON multimedia
92400 Courbevoie (FR)**

(72) Inventors:
• **SAVATIER, Tristan
Los Angeles, CA 90024 (US)**
• **DELPUCH, Alain
Los Angeles, CA 90025 (US)**

(74) Representative:
**Hartnack, Wolfgang, Dipl.-Ing. et al
Deutsche Thomson-Brandt GmbH
Patentabteilung
Göttinger Chaussee 76
30453 Hannover (DE)**

(56) References cited:
FR-A- 2 606 187    US-A- 4 394 774
US-A- 4 704 628    US-A- 4 754 492

• **Proceedings of SPIE, volume 1244, " Image
Processing Algorithms and Techniques" (Santa
Clara, California), 12-14 February 1990, C.A.
Gonzales et al.: "DCT based video compression
using arithmetic coding ", pages 305-311, see
whole article**

• **IEEE Transactions on Circuits and Systems,
volume 35, no. 2, February 1988, IEEE, (New
York, NY, US), H. Gharavi: "Low bit-rate video
transmission for ISDN application", pages
258-261, see page 260, paragraph 2.4,
"Quantization", see the whole document.**
• **International Conference on Communications,
Conference Record, volume 2 of 3, (Seattle, WA,
US), 8-12 June 1980, K.N. Ngan et al.: "Lowpass
filtering in the cosine transform domain", pages
31.7.1 - 37.7.5 see the whole document**
• **AEÜ, Archiv für Elektronik &
Übertragungstechnik, volume 42, no.4,
July/August 1988, (Stuttgart, DE), J. Speidel
et.al.: "Space and transform domain filtering in
hybrid coders", pages 230-235, see whole
document**
• **Review of The Electrical Communications
Laboratories, volume 36, no.2, March 1988,
Nippon Telegraph and Telephone corporation,
(Tokyo, JP), N. Mukawa et al.: "384-kbit/s video
codec", pages 225-231, see the whole article**
• **"Symposium Record on the 16th Intrnational TV
Symposium", Broadcast sessions, (Montreux,
CH); 17-22 June 1989, K. Grotz et al.: "Image
coding techniques for 64 kbit/s channels", pages
387-409, see page 388, paragraph 2.2, "Structure
of a still picture codec", complete**
• **Signal Processing, volume 19, no.1, January
1990, Elsevier Science Publishers B.V.,
(Amsterdam, NL), H. Schiller et al.: "Efficient
coding of side information in a low bitrate hybrid
image coder", pages 61-73, see page 66,
paragraph 4, "Efficient motion vector coding",
complete**

- NTZ Nachrichtentechnische Zeitschrift, volume 42, no. 3, March 1989,(Berlin, DE) D. Biere et al.: "Video-Codec und Endgeräte für das ISDN-Bildtelefon", pages 136-138, 140-142, 144, 145 see the whole article

**Description**

<u>Background of the invention</u>

The present invention relates to digital image processing using block edges filtering.

A large number of coding/decoding methods for full-motion digital images have been proposed in recent years. Because the available data rate in present transmission channels and storage media is limited it is an object of these coding methods to reduce the data rate of the coded and transmitted or stored video signal.

For the purpose of storing digital motion images on optical storage media, e.g. CD-ROM, MOD (Magneto Optical Disc), a maximum video data rate of about 1.2 Mbits/s is allowed.

One general example of a system for coding and decoding digital video signals is disclosed in "Scene Adaptive Coder", W.H. Chen, W.K. Pratt, IEEE Transactions on Communications, Vol. COM-32, No. 3, issued in March, 1984 in which scene adaptive coding/decoding of video signals is described, using DCT (discrete cosine transform), a variable threshold for the DCT coefficients, quantization, Huffman-coding and a buffer in the coder and a buffer, Huffmann decoder, threshold adding and inverse DCT in the decoder.

In US Patent US-A-4,785,349 in a simular way regions of a frame are coded separately. In addition, motion compensation is performed using this regions.

In both systems the fullness of the buffer controls the threshold and the quantizer step size, respectively. It is to be made sure that the buffer will have no overflow or underflow within the present frame. This causes a varying quantizer step size and a consequently varying image quality within each frame. But if blocks and regions, respectively, are coded and decoded including data rate reduction, artefacts (blocking effects) will arise after decoding at the boundaries of these blocks and regions, respectively.

NTZ Nachrichtentechnische Zeitschrift, Vol. 42, pages 136 to 145, discloses the processing of digital image sequences using intraframe coding and motion compensated interframe coding wherein blocks of DCT coefficients or coefficient differences are quantized, controlled by the fullness of a buffer, and Huffman coded. All AC coefficients in a block undergo the same quantization.

In AEÜ Archiv für Elektronik & Übertragungstechnik, Vol. 42, pages 230 to 235, a hybrid coder is shown which performs motion compensated prediction using filtering in the coding loop.

Review of the Electrical Communications Laboratories, Vol. 36, pages 225 to 231, describes a video codec which carries out a filtering in the coding loop whereby all pixels in a block are filtered.

<u>Summary of the invention</u>

It is an object of the present invention to make artefacts at block edges invisible in case of motion compensated digital images and to improve the image quality of the decoded images.

This object is achieved by the method of claim 1 and the apparatus of claim 4.

A sequence of digital images is coded using differential coding. The n-th image of the sequence is partitioned in blocks B (n, i, j) of pixels, where i and j are the frame coordinates of the left top pixel of the block and n is a frame number.

The temporal correlation between the image content of frame n and frame n-1 is used to code each block in frame n as a displacement of the most similar block in frame n-1.

V (n, x, y) is called the displacement of the block B(n,i,j) from frame n-1 to frame n. This displacement is used as a predictor for the motion compensation. If B' (n, i, j) is the decoded block B (n, i ,j), then B' (n, i, j) = B' (n-1, i+x, j+y).

V(n,x,y) is computed by means of a search in the decoded frame n-1 for a block, which minimizes the difference between B(n,i,j) and B'(n-1,i+x,j+y). The steps for a coding loop are:

(1) code frame n using motion compensation and the current predictor
(2) decode frame n
(3) filter decoded frame n
(4) select the decoded and filtered frame n and calculate the current predictor
(5) go to step (1) to code frame n+1

The decoding loop is build accordingly in a symmetrical manner.

The basic idea of the invention is to apply a filter within the decoding loop on the edges of the blocks to reduce the block effect. This filter improves the quality of the current image and reduces the propagation of blocking effect artefacts in subsequent images.

Another aspect of the invention is to apply this filter to a block edge only if the two adjacent blocks have different displacements. By doing this the resolution of the image is enhanced.

The advantages of the present invention will become more apparent from the following more detailed description when taken in conjunction with the accompanying drawings.

Brief description of the drawings

Fig. 1    is a schematic block diagram of a coder

Fig. 2    is a schematic block diagram of a decoder

Fig. 3    shows an image with adjacent blocks of pixels

Fig. 4    shows a quantization matrix for luminance blocks

Fig. 5    shows a scanning order

Fig. 6    shows a quantizer function graph

Description of the preferred embodiments

The images have a medium resolution, e.g. 704 * 288 pixels. The luminance component Y is coded for each of the pixels, whereas the color components U and V are coded in the form of macro-pixels, a macro-pixel being made of 4 luminance pixels.
Each frame is divided into marcro-blocks of 16*16 luminance pixels. Each macro-block is composed of:

- 4 blocks of 8*8 pixels for Y,
- 1 block of 8*8 macro-pixels for U,
- 1 block of 8*8 macro-pixels for V.

A single 704 * 288-image not encoded consists of:

- (704 / 16) * (288 / 16) = 792 macro blocks,

- 792 * 6 = 4752 blocks,

- 4752 * 64 = 304128 bytes.

Such a frame would occupy a size of about 300 KByte in the uncoded format, whereas the available bandwidth allows about (1.2 Mbit/s) / (8 * 25 /s) = 6 KByte per frame, i.e. less than 1/2 bit per pixel. A compression rate of about 1/50 is to be achieved.

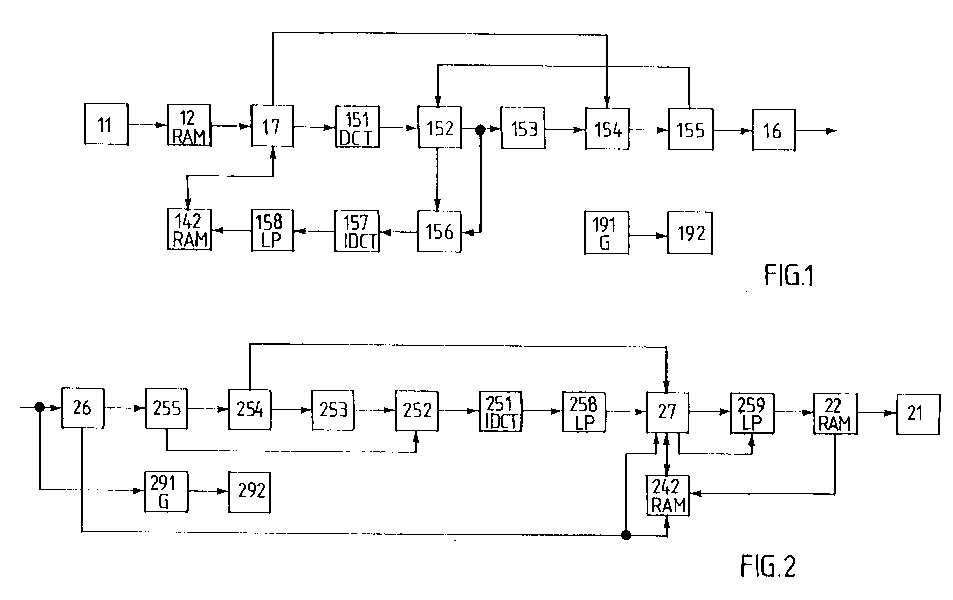

In Fig. 1 an digital image source 11 is connected to a frame memory (a RAM) 12 which stores frame n. Sequentially each block of pixels is then send to a motion compensation circuit 17.
As most of the time frame n-1 is very close to frame n, only the differences between frames n-1 and n are encoded. This technique is called interframe coding (delta-coding) and results in a relatively low data rate.
However in some cases it is necessary to encode a frame by itself, e.g. when there is a "cut" in the image sequence. This technique is called intraframe coding. It is also necessary to use intraframe coding to allow non-sequential decoding, e.g. start decoding from various points within an image sequence stored on a CD. But intraframe coding results in a higher data rate.
Because in case of motion in the image sequence interframe coding may yield no good quality of the coded image, moving pieces in the image sequence should be detected. Thereby the differences between the moving pieces from frame n-1 and the according pieces from frame n are minimized and the interframe coding leads to improved image quality. The purpose of motion compensation is to build an image as close as possible to frame n by only taking moving pieces out of frame n-1.
This is performed within motion compensation circuit 17 on a block basis: the block $B(n,i,j)$ of frame n located at frame coordinates $(i,j)$ is evaluated by copying the block $B'(n-1,i+x,j+y)$ stored at frame coordinates $(i+x, j+y)$ in a frame memory (a RAM) 142 which contains frame n-1. The displacement $V(n,x,y)$ represents the apparent motion of the image at this point of screen. When using 8*8 pixel blocks for motion compensation the displacement may have a precision of ±l pixel and a range of ±16 pixel.
In case of non-random block scanning the motion compensation vectors are delta coded. The delta vectors (dx, dy) range from -32 to +32 and the most frequent value encountered is O (vector same as previous vector). The delta coordinates are coded independently with adapted Huffman codes in Huffman coder 154. As the statistics for dx and dy are not identical two Huffman codes are used.

Then the vectors are packed 4 by 4: As there is a big chance for dx and dy to be zero, the distribution of zero values among the 4 dx values is coded with an adapted Huffman code. Only the non-zero values of dx are coded after that (with another adapted Huffman code). The same technique is used for dy.

In order to optimise the size of the code for the motion compensation vectors, a certain tolerance is accepted. If V is the target block (not coded), V' is the block obtained by using the best motion compensation vector computed for V, and $V'_o$ is the block obtained by using the previous motion compensation vector (the one which was used for the block left of V), the previous motion compensation vector will be used again, if $E(V'_o,V) < E(V',V) + E_o$.

By choosing an appropriate threshold $E_o$, the number of delta vectors equal to zero can become very big, and the coding will be much more efficient because zero delta vectors are coded with very few bits. This leaves more room for the error correction.

Once a good approximation of frame n has been obtained from frame n-1 by using motion compensation, the residual pixel differences remain to be encoded. To have an estimation of the difference between two blocks and to decide for each block, if motion compensated interframe coding or intraframe coding yields better image quality in connection with a given data rate, an error function (e.g. the quadratic error) is evaluated in motion compensation circuit 17. The equation of the quadratic error is:

$$E(B,B') = \sum_{ii=0}^{7} \sum_{jj=0}^{7} (P(ii,jj) - P'(ii,jj))^2$$

where ii and jj are the coordinates within the blocks B(n,i,j) and B'(n-1,i+x,j+y), respectively, of pixels P and P', respectively, and E(B,B') is an estimation of the difference between block B(n,i,j) of frame n and block B'(n-1,i+x,j+y) of frame n-1. B(n,i,j) is the target block (not coded), B'(n-1,i+x,j+y) is the block obtained after interframe coding.

Motion compensation is worth being encoded only if:

$$E(B,B') < (1 / 2) * E(B,B_O)$$

$B_O$ is the block B(n-1,i+x,j+y) obtained only with motion compensation (not interframe coded).

If motion compensation is calculated for 8*8 pixel blocks within a range of ±16 pixels, the research for the best matching block is performed in a 40*40 pixels area (33*33 possible displacements). A brute force search is performed among all the possible displacements (x,y) and the displacement which corresponds to the minimum mean absolute error is chosen. This vector is transferred to a Huffman coder 154. Motion compensation circuit 17 may contain a memory in which this 40*40 pixel area is stored.

The equation of the mean absolute error Em is:

$$Em(B,B') = \sum_{ii=0}^{7} \sum_{jj=0}^{7} |P(ii,jj) - P'(ii,jj)|,$$

where ii and jj are the coordinates within the blocks B(n,i,j) and B'(n-1,i+x,j+y), respectively, of pixels P and P', respectively. B(n,i,j) is the target block (not coded), B'(n-1,i+x,j+y) is the block obtained after interframe coding. The Y component pixel values are used.

In theory the motion compensation should be performed in the decoded frame n-1 for that is the one used at decoding time to built the next frame, but practically the source frame n-1 is used instead of the decoded one.

Displacements obtained by using source images are easier to encode efficiently, because of the lower level of noise and of the better quality of the source images compared with decoded images. Random noise tends to generate a random factor in the displacements.

Motion compensation in principle is also described in US Patent No. 4,785,349, columns 27 - 29.

In case of intraframe coding the block B(n,i,j) of pixels of frame n is coded directly, in case of interframe coding the block B'(n-1,i+x,j+y) is subtracted from block B(n,i,j) in motion compensation circuit 17 and then coded. Frame memory 142 receives addresses from motion compensation circuit 17.

The resulting block of pixels or pixel differences, respectively, is transformed in a DCT circuit 151.

Each 8*8 block of values representing spatial data (such as the luminance component Y) is transformed by a DCT into an 8*8 block of spectral coefficients representing the frequency distribution in both, horizontal and vertical direction. The range of the coefficients in the transformed block is eight times the range of the values in the source block. The top-left coefficient of the transformed block is particular: it is the average value of the source block (multiplied by eight). This coefficient is called DC value, the other coefficients are called AC values. It appears that the DC coefficient is very important, and that even if a high quantization level is requested, there should be a minimum error on this value since an error on the average produces very noticeable artefacts (blocking effects).

Before being encoded further, the block is quantized in quantizer 152 by an algorithm chosen to trade off perceived image quality against bit rate. The algorithm of quantizer 152 is described by the following equations:

$$y = \frac{x - T}{g} + 1 \qquad \text{for } x \geq T,$$

$$y = 0 \qquad \text{for } -T < x < T,$$

$$y = \frac{x + T}{g} - 1 \qquad \text{for } x \leq -T,$$

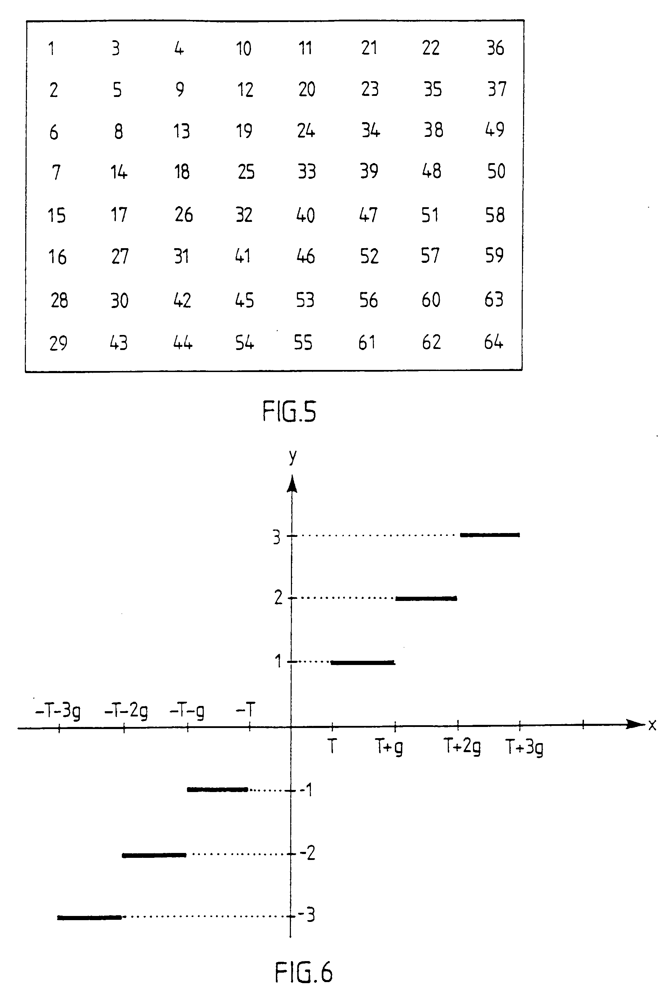

where x is a DCT coefficient of the transformed block, y is the quantized coefficient, T is the threshold at which the output is forced to zero and g is the quantization step size. The values of T and g are chosen according to the available transmission or storage bandwidth. The according quantizer function graph is shown in Fig. 6.

The quantizer step size g depends on the position of the coefficient in the transformed block: high frequency coefficients will be quantized coarser than low frequency coefficients because lower frequency DCT coefficients are relatively less important in the perception of the subjective quality of the decoded image. The quantizer step size is obtained for each position in the block by scaling with a predefined quantization matrix Q. As an example, the quantization matrix used for Y is shown in figure 4. A different quantization matrix is used for U and V.

A minimum value should be defined for g, to guarantee that the quantized frequency coefficients are always in the range covered by the code used to encode them. As for threshold T, one may use $T = g / 2$ .

In order to simulate the behaviour and the decoding error of a decoder (Fig. 2) and to correct the coding calculation within the coder (Fig. 1) accordingly, a feedback loop is built consisting of a de-quantizer 156, a DCT circuit 157 and a filter circuit 158. De-quantizer 156 performs the according inverse function of quantizer 152 and DCT circuit 157 an inverse DCT. The filter circuit 158 is used in order to eliminate source and quantization noise, glitches, isolated pixels, to reduce high frequencies which are hard to code and to reduce the propagation of block effect artefacts in subsequent images. The filter may be a median filter or a simple convolution filter, both two-dimensional with a 3*3 pixels kernel. This kind of filters are well known by a man skilled in the art.

The filtered blocks B'(n-1,i,j) at the output of filter circuit 158 are stored in frame memory 142 which is also connected to motion compensation circuit 17. By this way the feedback loop is closed.

The quantized block consists usually of few important spectral components (statistically concentrated in the low horizontal and vertical frequencies), separated by a lot of zeros. Therefore the quantized DCT coefficients in the block are first folded, thereby transformed in a linear list containing alternatively a run of r zeros (r may be equal to 0) and a non zero coefficient and are then encoded with variable wordlength (runlength coding) together with the displacements in the Huffman coder 154.

The folding of each of the matrices of 64 DCT coefficients is performed in a sorter 153 accordingly to the order shown in Fig. 5. The sorting starts with coefficient No. 1, which is the DC coefficient, is continued in a viceversa diagonal manner and ends with coefficient No. 64. This kind of sorting is called 'zigzag scanning'. After the last coefficient of the present block an End-of-Block code (EOB) is added.

The zigzag order can be chosen in order to increase the probability of having a very long run of zero coefficients until the end of the block. Because the FOB code is a frequent event, it is coded with few bits.

The optimal zigzag order depends on the quantization method and of the code used subsequently.

Zigzag scanning and runlength coding are described in principle in the above mentioned article "Scene Adaptive Coder" by Chen and Pratt.

The Huffman code for encoding the runs of zeros with a maximum efficiency contains 64 possible runs of r zeros (r ranging from 0 to 63). An additional code is reserved for the EOB sign. The code defined for each run of zeros is totally independent of the value that follows the run.

Another Huffman code encodes the non-zero coefficients with a maximum efficiency. The range covered by this code is [-256,-1] and [+1,+256].

As quantized non-zero coefficients have an important probability to be ±1, particularly in the higher frequency coefficients because they are more strongly quantized, a special code has been reserved to code a terminal run of ±1 values. The signs of the non-zero coefficients are always coded with one bit, as their event may be considered as random with a 50% probability.

The Huffman coded data are stored in the buffer within buffer circuit 155 with a variable data rate and read out with a constant data rate. A channel coder 16 receives these data together with other signals.

In order to guaranty the data rate and to avoid buffer overflow or underflow the quantization step size of quantizer 152 and de-quantizer 156 is adapted by means of a quantization level, which is recalculated after each block has been encoded within buffer circuit 155 as a function of the amount of the already encoded data for the frame, compared with the total buffer size. This way quantization level can advantageously be recalculated by the decoder and does not need to be transmitted.

The scanning of the blocks, e.g. 32, 33, 34, 35, 36, within the present frame 31 is performed normally row by row and column by column.

Advantageously the scanning may be performed in a pseudo-random fashion to have a better estimation of the overall quantization level for a frame to achieve a certain data rate. The pseudo-random block scanning order can be changed for each frame to get even better results. In this case the kind of block scanning will be transmitted and stored, respectively, too.

The channel coder 16 adds the inter/intra-information and the Huffman coded motion compensation information and e.g. pseudo-random address information, audio signals, error correction information and sync words to the video data stream.

Clock Generator 191 supplies control circuit 192 with clock pulses. Control circuit 192 supplies all the other circuits in the coder with appropriate control signals.

In Fig. 2 a channel decoder 26 receives the storage media or transmission channel data stream. This data stream is split into luminance and chrominance signals (Y, U and V), motion compensation information, inter/intra-decision information, audio signals, sync words and, if required, pseudo random block addresses. In addition error correction is performed within channel decoder 26.

The video signal, e.g. the luminance component, is fed with a constant data rate together with the Huffman coded displacements into buffer circuit 255 and transferred with a variable data rate from this buffer to a Huffman decoder 254. In this circuit the according decoding of the different Huffman codes, the special code for a terminal run of ±1 values and EOB code is performed.

In the inverse sorter 253 an inverse scanning according to sorter 153 and Fig. 5 is performed. At the output are blocks of quantized 8*8 DCT coefficients available. In de-quantizer 252 the coefficients are expanded approximately to their value at the input of quantizer 152 in the coder. This includes an inverse scaling according to quantization matrix Q (Fig. 4). The quantization level in de-quantizer 252 is controlled by the fullness of the buffer and recalculated in buffer circuit 255 and does not need to be transmitted.

A DCT circuit 251 performs an inverse DCT on the 64 coefficients of each block.

The pixel values and pixel difference values, respectively, of the blocks are transferred to a filter 258. This filter may have a frequency response according to the response of filter 158 in the coder.

The output of filter 258 is transferred to motion compensation circuit 27. The motion compensation information and inter/intra-decision information from channel decoder 26, too, is fed to the motion compensation circuit 27. The displacements may address a frame memory (a RAM) 242 for frame n-1. In case of intraframe coding of the present block the output signal from frame memory 242 is not added and in case of interframe coding this output signal is added (motion compensated) to the pixel difference values in motion compensation circuit 27.

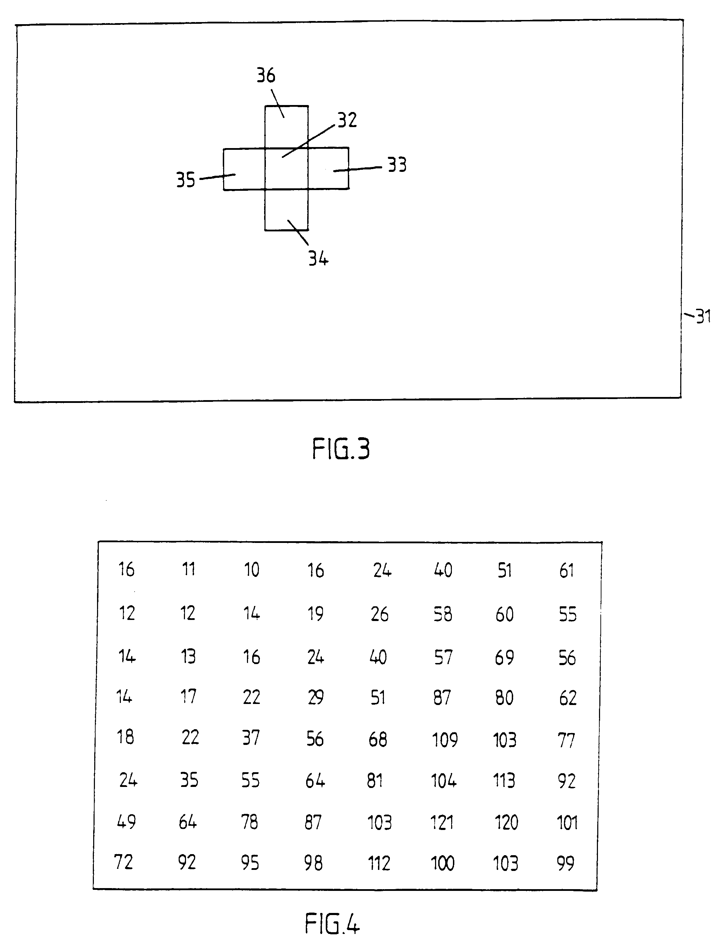

The (motion compensated) blocks are transferred from motion compensation circuit 27 to a second filter circuit 259. In this filter block edges filtering is performed. Because each block is coded separately, there may arise visible discontinuities at the boundaries of these blocks. Therefore in the second filter 259 the block edges become filtered horizontally or vertically, respectively. Let x0, x1, x2, x3, x4, x5, x5, x6, x7; x8, x9 ... be a line of pixels. Pixel x0 to pixel x7 belong to a first block, e.g. block 32 in Fig. 3, pixel x8, x9 and so on belong to a horizontal adjacent second block, e.g. block 33. Then pixel x7 is recalculated (filtered) as e.g. x7 = (x6 + 2 * x7 + x8) / 4 and pixel x8 is recalculated as x8 = (x7 + 2 * x8 + x9) / 4.

Advantageously this filtering (horizontal and vertical) for block 32 and block 33, respectively, is only carried out, if one or more of the according adjacent blocks 33 - 36 have a distinct displacement. This leads to an improved resolution at the block boundaries.

Therefore motion compensation circuit 27 may contain a pixel and a displacement memory and control the second filter circuit 259.

The output blocks of the second filter circuit 259 are stored in a frame memory (a RAM) 22 as frame n. Before storing the according blocks are written into frame memory 242 as frame n-1. In case of pseudo random block scanning memory 22 can be addressed by the additional transmitted or in the decoder generated pseudo-random block addresses.

Frame memory 22 can be read out pixel by pixel and line by line. The resulting signal can be displayed e.g. on a TV screen 21.

The processing for the chrominance components U and V is performed in a similar way. Filter coefficients and the quantization matrix may vary. As mentioned before the displacement calculation in motion compensation circuits 17 and 27, respectively, is carried out with the Y component only. Clock regeneration circuit 291 supplies control circuit 292 with clock pulses. Control circuit 292 supplies all the other circuits in the decoder with appropriate control signals.

## Claims

1. Method of processing digital image sequences, comprising the encoding steps:

   - scanning of frames of a digital video signal of a type in which each frame (31) thereof comprises a plurality of blocks of pixels (32-36) to get these blocks of pixels;
   - estimating motion vectors, providing intraframe-blocks of pixel values or motion compensated (17) interframe-blocks of pixel difference values depending on the result of a block error calculation and providing an intra/inter decision signal;
   - transforming (151) the blocks of pixel values and pixel difference values, respectively, with a DCT to blocks of coefficients;
   - quantising (152) the coefficients, controlled by the fullness of a buffer (155);
   - coding blocks of quantised coefficients in a Huffman coder (154), thereby providing groups of coded coefficients;
   - coding the motion vectors in a Huffman coder (154), and comprising the decoding steps:
   - decoding (254) the groups of coded coefficients in a Huffman decoder, thereby providing blocks of decoded coefficients;
   - decoding the motion vectors in a Huffman decoder (254);
   - dequantising (252) the decoded coefficients, controlled by the fullness of a buffer (255);
   - transforming (251) blocks of dequantised coefficients with an inverse DCT to pixel values and pixel difference values, respectively;
   - providing (27) a motion compensation for the interframe-blocks of pixel difference values, thereby evaluating the motion vectors;
   - generating (27) blocks of pixels out of intraframe-blocks of pixel values and interframe-blocks of pixel difference values, respectively, depending on the intra/inter decision signal;
   - arranging (22) the blocks of pixels in frames (31) of a digital video signal,

   **characterised** in that, when encoding, each block of coefficients is quantised (152) individually by the use of a quantisation level and that each coefficient of the block is quantised individually by the use of a quantisation matrix (Fig. 4);
   and that, when decoding:

   - said dequantising (252) is performed individually for the blocks of decoded coefficients by the use of the respective encoding quantisation level and said dequantising of each decoded coefficient of the block is performed individually by the inverse use of the encoding quantisation matrix (Fig. 4);
   - filtering (259) the pixels at the boundaries of the blocks (32-36) of pixels, but filtering not at a boundary if the motion vector for the respective adjacent block is nearly identical.

2. Method as defined in claim 1, comprising the step of:

   - coding the motion vectors in the form of difference vectors with respect to the according foregoing vector.

3. Method as defined in claim 1 or 2, comprising the steps of:

   - inserting a feedback loop, consisting of dequantising (156) and inverse DCT transforming (157) after the quantising step;
   - using the resulting decoded coefficient blocks for motion estimation, error calculation and motion compensation (17).

4. Method according to any of claims 1 to 3, wherein said filtering (259) is carried out in two spatial directions.

5. Decoding apparatus for carrying out the method according to any of claims 1 to 4, comprising:

- means (254) for Huffman decoding groups of coded coefficients, thereby providing blocks of decoded coefficients, and for Huffman decoding motion vectors;
- dequantising means (252) for the coded coefficients, which are controlled by the fullness of a buffer (255);
- means (251) for transforming blocks of dequantised coefficients with an inverse DCT to pixel values and pixel difference values, respectively;
- motion compensation means (27) for the interframe-blocks of pixel difference values, which evaluate the motion vectors;
- means (27) for generating blocks of pixels out of intraframe-blocks of pixel values and interframe-blocks of pixel difference values, respectively, depending on an intra/inter decision signal;
- means (22) for arranging the blocks of pixels in frames (31) of a digital video signal,

**characterised** in that said dequantising means (252) operate individually for the blocks of coded coefficients by the use of the respective encoding quantisation level and said dequantising means operate on each coded coefficient of each block individually by the inverse use of the encoding quantisation matrix (Fig. 4);

- means (259) for filtering the pixels at the boundaries of the blocks (32-36) of pixels, but which filter not at a boundary if the motion vector for the respective adjacent block is nearly identical.

6. Apparatus according to claim 5, wherein said means (259) for filtering operate in two spatial directions.

**Patentansprüche**

1. Verfahren zum Verarbeiten digitaler Bildsequenzen, umfassend die Kodierungsschritte:

Abtasten von Vollbildern eines digitalen Videosignals, von dem jedes Vollbild (31) eine Vielzahl von Pixelblöcken (32 - 36) umfaßt, um diese Pixelblöcke zu bekommen;

Ermitteln von Bewegungsvektoren, Vorsehen von Intra-Vollbildblöcken von Pixelwerten oder von bewegungskompensierten (17) Inter-Vollbildblöcken von Pixel-Differenzwerten in Abhängigkeit von dem Ergebnis einer Block-Fehlerberechnung, und Erzeugen eines Intra/Inter-Entscheidungssignals;

Transformieren (151) der Blöcke von Pixelwerten bzw. von Pixel-Differenzwerten mit einer DCT in Blöcke von Koeffizienten;

Quantisierung (152) der Koeffizienten, gesteuert durch den Füllungsgrad eines Puffers (155);

Kodieren von Blöcken von quantisierten Koeffizienten in einem Huffmann-Kodierer (154), um dadurch Gruppen von kodierten Koeffizienten zu erzeugen;

Kodieren der Bewegungsvektoren in einem Huffmann-Kodierer (154),

und umfassend die Dekodierungsschritte:

Dekodieren (254) der Gruppen von kodierten Koeffizienten in einem Huffmann-Dekodierer, um dadurch Blöcke von dekodierten Koeffizienten zu erzeugen;

Dekodieren der Bewegungssektoren in einem Huffmann-Dekodierer (254);

Dequantisieren der dekodierten Koeffzienten, gesteuert durch den Füllgrad eines Puffers (255);

Transformieren (251) von Blöcken von dequantisierten Koeffizienten mit einer Inversen DCT in Pixelwerte bzw. Pixel-Differenzwerte;

Erzeugen (27) einer Bewegungskompensation für die Inter-Vollbildblöcke von Pixel-Differenzwerten, um dadurch die Bewegungssektoren zu ermitteln;

Erzeugen (27) von Pixelblöcken aus Intra-Vollbildblöcken von Pixelwerten bzw. aus Inter-Vollbildblöcken von Pixel-Differenzwerten in Abhängigkeit von dem Intra/Inter-Entscheidungssignal;

Anordnung (22) der Pixelblöcke in Vollbildern (31) eines digitalen Videosignals, <u>dadurch gekennzeichnet</u>, daß beim Kodieren:

jeder Block von Koeffizienten individuell durch die Verwendung eines Quantisierungspegels quantisiert wird (152), und daß jeder Koeffizient des Blockes individuell durch die Verwendung einer Quantisierungsmatrix quantisiert wird (Fig. 4);
und daß beim Dekodieren:
die Dequantisierung (252) individuell für die Blöcke von dekodierten Koeffizienten durch die Verwendung des entsprechenden Kodierungs-Quantisierungspegels durchgeführt wird, und daß die Dequantisierung jedes dekodierten Koeffizienten des Blocks individuell durch die inverse Benutzung der Rodierungs-Quantisierungsmatrix (Fig. 4) durchgeführt wird;
die Pixel an den Begrenzungen der Pixelblöcke (32 - 36) gefiltert werden (259), aber eine Filterung nicht an einer Begrenzung erfolgt, wenn der Bewegungsvektor für den jeweils benachbarten Block nahezu identisch ist.

2. Verfahren nach Anspruch 1, umfassend den Schritt:
Kodieren der Bewegungsvektoren in die Form Differenzvektoren in bezug auf den entsprechenden vorangehenden Vektor.

3. Verfahren nach Anspruch 1 oder 2, umfassend die Schritte:

Einfügen einer Rückkopplungsschleife, bestehend aus dem Dequantisieren (156) und der inversen DCT-Transformation (157) nach dem Quantisierungsschritt;

Verwenden der resultierenden dekodierten Koeffizientenblöcke zur Bewegungsermittlung, Fehlerberechnung und Bewegungskompensation (17).

4. Verfahren nach einem der Ansprüche 1 - 3, bei dem die Filterung (259) in zwei räumlichen Richtungen durchgeführt wird.

5. Dekodierungsvorrichtung zur Durchführung des Verfahrens nach einem der Ansprüche 1 - 4, umfassend:

Mittel (254) zur Huffmann-Dekodierung von Gruppen von kodierten Koeffizienten, um dadurch Blöcke von dekodierten Koeffizienten zu erzeugen, und zur Huffmann-Dekodierung von Bewegungssektoren;
Dequantisierungsmittel (252) für die kodierten Koeffizienten, die durch den Füllgrad eines Puffers (255) gesteuert werden;
Mittel (251) zum Transformieren von Blöcken von dequantisierten Koeffizienten mit einer inversen DCT in Pixelwerte bzw. Pixel-Differenzwerte;
Bewegungskompensationsmittel (27) für die Inter-Vollbildblöcke von Pixel-Differenzwerten, die die Bewegungssektoren ermitteln;
Mittel (27) zur Erzeugung von Pixelblöcken aus Intra-Vollbildblöcken von Pixelwerten bzw. aus Inter-Vollbildblöcken von Pixel-Differenzwerten in Abhängigkeit von einem Intra/Inter-Entscheidungssignal;
Mittel (22) zur Anordnung der Pixelblöcke in Vollbildern (31) eines digitalen Videosignals,

<u>dadurch gekennzeichnet</u>, daß die Dequantisierungsmittel (252) individuell für die Blöcke von kodierten Koeffizienten durch die Verwendung des entsprechenden Kodierungs-Quantisierungspegels arbeiten, und daß die Dequantisierungsmittel individuell für jeden Koeffizienten jedes Blocks durch die inverse Verwendung der Kodierungs-Quantisierungsmatrix arbeiten (Fig. 4);
Mittel (259) zur Filterung der Pixel an den Begrenzungen der Pixelblöcke (32 - 36), wobei die Filterung aber nicht an einer Begrenzung erfolgt, wenn der Bewegungsvektor für den entsprechenden benachbarten Block nahezu identisch ist.

**6.** Vorrichtung nach Anspruch 5, bei der die Mittel (259) zur Filterung in zwei räumlichen Richtungen arbeiten.

**Revendications**

**1.** Procédé de traitement de séquences d'images numériques, comprenant les étapes de codage:

- balayage des trames d'un signal vidéo numérique d'un type dans lequel chaque trame (31) du signal comprend une pluralité de blocs de pixels (32 à 36) pour obtenir ces blocs de pixels;
- estimation des vecteurs de mouvement, fourniture de blocs intra-trame des valeurs de pixels ou de blocs inter-trame à mouvement compensé (17) de valeurs de différences de pixels en fonction d'un calcul d'erreur de bloc et fourniture d'un signal de décision intra/inter;
- transformation (151) des blocs de valeurs de pixels et valeurs de différences de pixels, respectivement, avec une DCT en blocs de coefficients;
- quantification (152) des coefficients, commandée par le niveau de remplissage d'une mémoire tampon (155);
- codage des blocs de coefficients quantifiés dans un codeur de Huffman (154), fournissant ainsi des groupes de coefficients codés;
- codage des vecteurs de mouvement dans un codeur de Huffman (154),

    et comprenant les étapes de décodage:

- décodage (254) des groupes de coefficients codés dans un décodeur de Huffman, fournissant ainsi des blocs de coefficients décodés;
- décodage des vecteurs de mouvement dans un décodeur de Huffman (254);
- déquantification (252) des coefficients décodés, commandée par le niveau de remplissage d'une mémoire tampon (255);
- transformation (251) des blocs de coefficients décodés avec une DGT inverse en valeurs de pixels et valeurs de différences de pixels, respectivement;
- fourniture (27) d'une compensation de mouvement pour les blocs inter-trame de valeurs de différences de pixels, évaluant ainsi les vecteurs de mouvement;
- génération (27) de blocs de pixels à partir des blocs intra-trame de valeurs de pixels et des blocs inter-trame de valeurs de différences de pixels, respectivement, en fonction du signal de décision intra/inter;
- disposition (22) des blocs de pixels en trames (31) d'un signal vidéo numérique,

    caractérisé en ce que, lors du codage, chaque bloc de coefficients est quantifié (152) individuellement par l'utilisation d'un niveau de quantification et en ce que chaque coefficient du bloc est quantifié individuellement par l'utilisation d'une matrice de quantification (figure 4);
    et en ce que, lors du décodage:

- ladite déquantification (252) est effectuée individuellement pour les blocs de coefficients décodés par l'utilisation du niveau de quantification de codage respectif et ladite déquantification de chaque coefficient décodé du bloc est effectuée individuellement par l'utilisation inverse de la matrice de quantification de codage (figure 4);
- filtrage (259) des pixels aux frontières des blocs (32-36) de pixels, mais pas de filtrage à une frontière si le vecteur de mouvement du bloc adjacent respectif est presque identique.

**2.** Procédé tel que défini à la revendication 1, comprenant l'étape de:

- codage des vecteurs de mouvement sous forme de vecteurs de différences par rapport au vecteur précédent conforme.

**3.** Procédé tel que défini à la revendication 1 ou 2, comprenant les étapes de:

- insertion d'une boucle de contre-réaction, consistant en la déquantification (156) et la transformation DCT inverse (157) après l'étape de quantification;
- utilisation des blocs de coefficients décodés résultants pour l'estimation du mouvement, le calcul d'erreur et la compensation de mouvement (17).

4. Procédé conformément à l'une quelconque des revendications 1 à 3, dans lequel ledit filtrage (259) est effectué dans deux directions spatiales.

5. Dispositif de décodage pour effectuer le procédé conformément à l'une quelconque des revendications 1 à 4, comprenant:

   - des moyens (254) de décodage de Huffman de groupes de coefficients codés, fournissant ainsi des blocs de coefficients décodés, et de décodage de Huffman de vecteurs de mouvement;
   - des moyens de déquantification (252) des coefficients codés, lesquels sont commandés par le niveau de remplissage d'une mémoire tampon (255);
   - des moyens (251) de transformation des blocs de coefficients déquantifiés avec une DGT inverse en valeurs de pixels et valeurs de différences de pixels, respectivement;
   - des moyens de compensation de mouvement (27) pour les blocs inter-trame de valeurs de différences de pixels, lesquels évaluent les vecteurs de mouvement;
   - des moyens (27) de génération de blocs de pixels à partir des blocs intra-trame de valeurs de pixels et des blocs inter-trame de valeurs de différences de pixels, respectivement, en fonction du signal de décision intra/inter;
   - des moyens (22) de disposition des blocs de pixels en trames (31) d'un signal vidéo numérique,

   caractérisé en ce que lesdits moyens de déquantification (252) fonctionnent individuellement pour les blocs de coefficients codés en utilisant le niveau de quantification de codage respectif, et lesdits moyens de déquantification fonctionnent sur chaque coefficient codé de chaque bloc individuellement en utilisant de manière inverse la matrice de quantification de codage (figure 4);

   - des moyens (259) de filtrage des pixels aux frontières des blocs (32-36) de pixels, mais de non-filtrage à une frontière si le vecteur de mouvement du bloc adjacent respectif est presque identique.

6. Dispositif conformément à la revendication 5, dans lequel lesdits moyens (259) de filtrage fonctionnent dans deux directions spatiales.

FIG.1

FIG.2

FIG.3

| | | | | | | | |
|---|---|---|---|---|---|---|---|
| 16 | 11 | 10 | 16 | 24 | 40 | 51 | 61 |
| 12 | 12 | 14 | 19 | 26 | 58 | 60 | 55 |
| 14 | 13 | 16 | 24 | 40 | 57 | 69 | 56 |
| 14 | 17 | 22 | 29 | 51 | 87 | 80 | 62 |
| 18 | 22 | 37 | 56 | 68 | 109 | 103 | 77 |
| 24 | 35 | 55 | 64 | 81 | 104 | 113 | 92 |
| 49 | 64 | 78 | 87 | 103 | 121 | 120 | 101 |
| 72 | 92 | 95 | 98 | 112 | 100 | 103 | 99 |

FIG.4

| | | | | | | | |
|---|---|---|---|---|---|---|---|
| 1 | 3 | 4 | 10 | 11 | 21 | 22 | 36 |
| 2 | 5 | 9 | 12 | 20 | 23 | 35 | 37 |
| 6 | 8 | 13 | 19 | 24 | 34 | 38 | 49 |
| 7 | 14 | 18 | 25 | 33 | 39 | 48 | 50 |
| 15 | 17 | 26 | 32 | 40 | 47 | 51 | 58 |
| 16 | 27 | 31 | 41 | 46 | 52 | 57 | 59 |
| 28 | 30 | 42 | 45 | 53 | 56 | 60 | 63 |
| 29 | 43 | 44 | 54 | 55 | 61 | 62 | 64 |

FIG.5

FIG.6